# EUROPEAN PATENT SPECIFICATION

(11) **EP 2 370 889 B1**
(45) Date of publication and mention of the grant of the patent: **22.07.2020**
(21) Application number: 09833047.5
(22) Date of filing: 17.12.2009
(51) Int. Cl.: G06F 3/0488, G06F 1/16

(54) **APPARATUS, METHOD, COMPUTER PROGRAM AND USER INTERFACE FOR ENABLING USER INPUT**
VORRICHTUNG, VERFAHREN, COMPUTERPROGRAMM UND BENUTZEROBERFLÄCHE FÜR BENUTZEREINGABE
APPAREIL, MÉTHODE, PROGRAMME INFORMATIQUE ET INTERFACE UTILISATEUR PRÉSENTANT LASAISIE DE DONNÉES

(30) Priority: 18.12.2008 US 317175
(43) Date of publication of application: 05.10.2011
(73) Proprietor: Nokia Technologies Oy, 02610 Espoo (FI)
(72) Inventor: TULI, Apaar, 00180 Helsinki (FI)
(74) Representative: Swindell & Pearson Limited
(86) International application number: PCT/IB2009/055815
(87) International publication number: WO 2010/070604

(56) References cited:
- EP-A2- 1 845 432
- WO-A1-2006/036069
- WO-A1-2009/105821
- WO-A2-2008/001203
- US-A1- 2005 216 867
- US-A1- 2006 017 692
- US-A1- 2006 164 382
- US-A1- 2007 176 898
- US-A1- 2008 183 313
- US-A1- 2009 228 792
- HARRISON B L ET AL: "SQUEEZE ME, HOLD ME, TILT MEÜ AN EXPLORATION OF MANIPULATIVE USER INTERFACES", CHI '98. HUMAN FACTORS IN COMPUTING SYSTEMS. CONFERENCE PROCEEDINGS. LOS ANGELES, CA, APRIL 18 - 23, 1998; [CHI CONFERENCE PROCEEDINGS. HUMAN FACTORS IN COMPUTING SYSTEMS], NEW YORK, NY : ACM, US, 18 April 1998 (1998-04-18), pages 17-24, XP000780770, ISBN: 978-0-89791-975-3

## Description

### FIELD OF THE INVENTION

Embodiments of the present invention relate to an apparatus, method, computer program and user interface for enabling user input. In particular, they relate to an apparatus, method, computer program and user interface for enabling user input where the apparatus comprises a user input device configured to detect an acceleration of the apparatus.

### BACKGROUND TO THE INVENTION

Hand held electronic apparatus are well known. They often have limited display sizes and limited space available for user input devices. However they also often enable a large number of different functions to be performed. It is useful for a user to be able to control such apparatus to select a particular function in a manner which is intuitive and simple for the user to use.

US 2005/0216867 discloses a motion controlled handheld device which includes a display having a viewable surface and operable to generate an image. The device includes a motion detection module operable to detect motion of the device within three dimensions and to identify components of the motion in relation to the viewable surface. The device also includes a motion response module operable to identify a base reference position, to track the motion of the device in relation to the base reference position, to modify the image in response to the motion, to detect a predetermined pattern of motion of the device, to maintain the image without adjustment during the predetermined pattern of motion, to detect a completion of the predetermined pattern of motion, and to reset the base reference position upon detecting completion of the predetermined pattern of motion.

### BRIEF DESCRIPTION OF VARIOUS EMBODIMENTS OF THE INVENTION

According to various, but not necessarily all, embodiments of the invention there is provided an apparatus comprising at least one processor and at least one memory storing computer program code, wherein the stored computer program code is configured to, with the at least one processor, cause the apparatus to at least: cause display of a first item on a touch sensitive display; receive an indication of a detected touch input, provided on the touch sensitive display, at the first item; select the first item in response to the touch input; receive an indication of a detected acceleration of the apparatus, the detected acceleration occurring while the touch input is maintained; and perform a function on the selected first item, in response to the acceleration of the apparatus occurring while the touch input is maintained.

The stored computer program code may be configured to, with the at least one processor, further cause the apparatus to: determine an acceleration profile of the apparatus based at least in part on the detected acceleration of the apparatus; and determine that the function corresponds to the determined acceleration profile

The determined acceleration profile may be defined based at least in part on a change in acceleration of the apparatus and on a direction of motion of the apparatus. The function may be determined from a plurality of functions, each of the plurality of functions corresponding to a respective acceleration profile.

In some embodiments of the invention, the first item may comprise a user interface element. The user interface element may comprise text and/or an image and/or a user selectable icon.

In some embodiments of the invention, the function may be to copy the first item to enable it to be pasted elsewhere.

In some embodiments of the invention, a second item may be displayed and in response to detection of the acceleration of the apparatus, a second function may be performed on the second item.

According to various, but not necessarily all, embodiments of the invention there is provided a method comprising: causing display of a first item on a touch sensitive display; receiving an indication of a detected touch input, provided on the touch sensitive display, at the first item; selecting the first item in response to the touch input; receiving an indication of a detected acceleration input, the detected acceleration input occurring while the touch input is maintained; and performing a function on the selected first item, in response to the acceleration input occurring while the touch input is maintained.

In some embodiments of the invention, the acceleration input may be an acceleration of an apparatus which displays the first item.

According to various, but not necessarily all, embodiments of the invention there is provided a computer program comprising computer program instructions for causing an apparatus to perform the method.

In some embodiments of the invention there is also provided a physical entity embodying the computer program. In some embodiments of the invention there is also provided an electromagnetic carrier signal carrying the computer program.

The apparatus may be for wireless communication.

### BRIEF DESCRIPTION OF THE DRAWINGS

For a better understanding of various examples of embodiments of the present invention reference will now be made by way of example only to the accompanying drawings in which:
Fig. 1 schematically illustrates an electronic apparatus;
Fig. 2 illustrates a flow chart showing method blocks of an embodiment of the invention; and
Figs. 3A to 3G illustrate an embodiment of the invention in use.

### DETAILED DESCRIPTION OF VARIOUS EMBODIMENTS OF THE INVENTION

The Figures illustrate an apparatus 1 comprising: a display 15 configured to display a first item 53; a touch sensitive user input device 17 configured to detect 33 a touch input; a user input device 19 configured to detect 37 an acceleration of the apparatus 1; and controller 4 configured to select the first item 53 in response to detection 33 of a touch user input and to perform a first function on the selected first item 53 in response to detection 37 of acceleration of the apparatus 1.

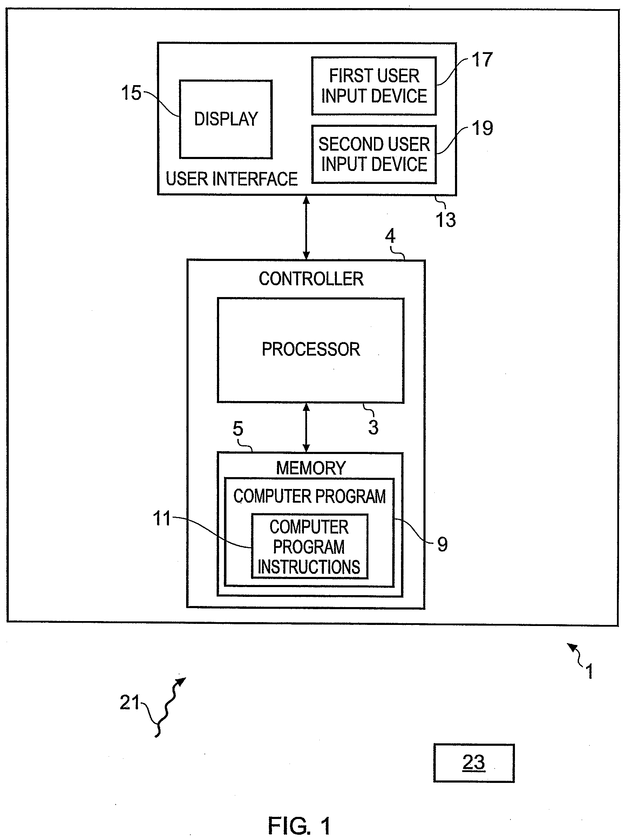

Fig. 1 schematically illustrates an apparatus 1 according to an embodiment of the invention. The apparatus 1 may be an electronic apparatus. Only features referred to in the following description are illustrated. It should, however, be understood that the apparatus 1 may comprise additional features that are not illustrated. The apparatus 1 may be, for example, a mobile cellular telephone, a personal computer, a camera, a personal digital assistant or any other apparatus that enables a user to select an item and perform a function on the selected item. The apparatus 1 may be a handheld apparatus 1 which can be carried in a user's hand, handbag or jacket pocket for example.

The illustrated apparatus 1 comprises: a user interface 13 and a controller 4. In the illustrated embodiment the controller 4 comprises a processor 3 and a memory 5 and the user interface 13 comprises a display 15, a first user input device 17 and a second user input device 19. The user interface 13 provides means for enabling a user to make inputs which may be used to control the apparatus 1.

The controller 4 provides means for controlling the apparatus 1. The controller 4 may be implemented using instructions that enable hardware functionality, for example, by using executable computer program instructions 11 in a general-purpose or special-purpose processor 3 that may be stored on a computer readable storage medium 23 (e.g. disk, memory etc) to be executed by such a processor 3.

The processor 3 is configured to receive input commands from the user interface 13 and also to provide output commands to the user interface 13. The processor 3 is also configured to write to and read from the memory 5.

The display 15 is configured to enable information to be displayed to a user of the apparatus 1. The information may comprise items such as text, images or user selectable icons.

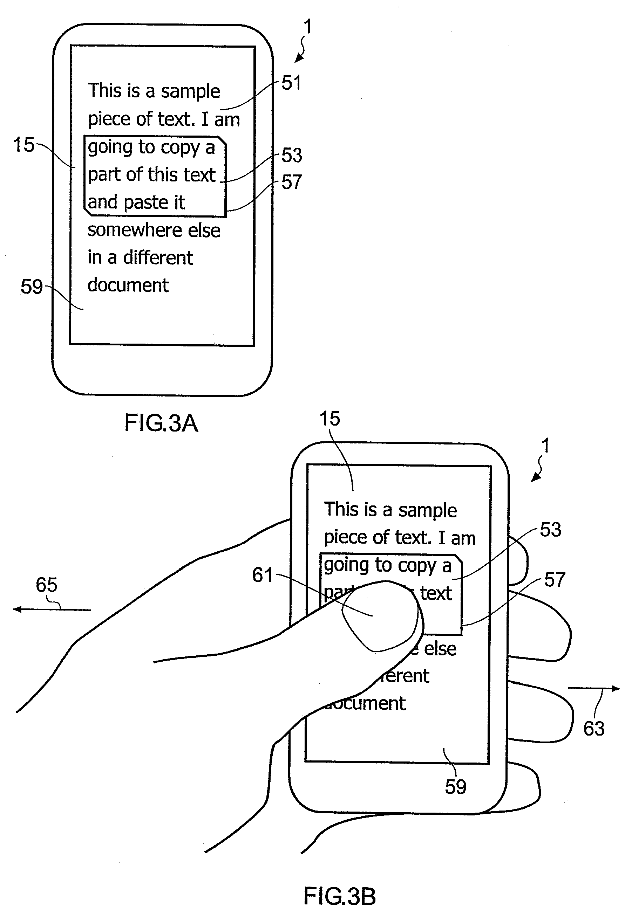

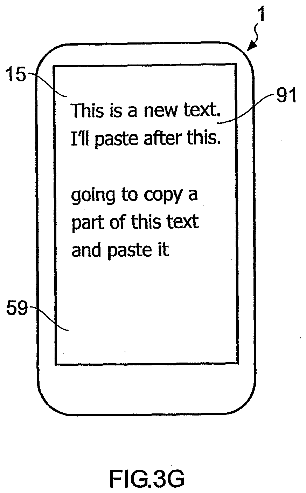

The display 15 is also configured to present graphical user interfaces 59 to a user. Examples of graphical user interfaces 59 which may be presented on the display 15 are illustrated in Figs. 3A to 3G.

According to some embodiments of the invention the first user input device 17 is a touch sensitive user input device. The touch sensitive user input device 17 may comprise a touch sensitive area of the display 15. In some embodiments of the invention the touch sensitive user input device 17 may be integrated with the display 15 to form a touch sensitive display 15.

The touch sensitive user input device 17 is configured to detect touch inputs. A user of the apparatus 1 may make a touch input by actuating the surface of the touch sensitive user input device 17. The surface of the touch sensitive user input device 17 may be actuated by a user using their finger or thumb 61 or any other suitable object such as a stylus to physically make contact with the surface. In some embodiments the user may also be able to actuate the touch sensitive user input device 17 by bringing their finger, thumb 61 or stylus close to the surface of the touch sensitive user input device 17.

The touch sensitive user input device 17 may be configured to distinguish between different types of touch inputs. For example the touch sensitive user input device 17 may be configured to distinguish between a trace input, a short actuation, a long actuation and a double actuation and any other type of actuation or combination or sequence of actuations.

A user may make a trace input by actuating the surface of the touch sensitive user input device 17 and then dragging their finger, thumb 61 or stylus across the surface. A user may make a short actuation by actuating a particular region of the surface of the touch sensitive user input device 17 for less than a predetermined time. A user may make a long actuation by actuating a particular region of the surface of the touch sensitive user input device 17 for more than a predetermined time. A user may make a double actuation by making two short actuations of a particular region of the surface within a predetermined time period.

The output of the touch sensitive user input device 17 is provided as an input to the controller 4 and is dependent upon the type of actuation of the touch sensitive user input device 17. Different types of input may enable different functions to be performed. The controller 4 may be configured to determine the type of input which has been made and enable the appropriate function to be performed.

The second user input device 19 is configured to detect an acceleration of the apparatus 1. The second user input device 19 may be an accelerometer. The accelerometer may comprise a micro electro-mechanical system (MEMS). The second user input device 19 enables a user to make an acceleration input. An acceleration input is any motion of the apparatus 1 which may be detected and used to control the apparatus 1. The acceleration input may be made by a user of the apparatus 1.

The acceleration detected by the accelerometer 19 may be any change in velocity of the apparatus 1. That is, the acceleration may be any change in the magnitude of the speed of the apparatus 1 which may be an increase or a decrease in speed. The acceleration of the apparatus 1 may also be a change in the direction of the motion of the apparatus 1, for example the apparatus 1 may be moving at a constant speed in a circular motion.

The accelerometer 19 is configured to detect the acceleration profile of the apparatus 1. The acceleration profile provides an indication of how the acceleration of the apparatus 1 changes over time. The accelerometer 19 provides an output to the controller 4 which is indicative of the acceleration profile of the apparatus 1. The controller 4 is configured to recognize particular acceleration profiles and in response to the detection of particular acceleration profiles control the apparatus 1 to perform a function corresponding to the recognized acceleration profile.

For example, if a user shakes the apparatus 1 by moving the apparatus 1 backwards and forwards quickly, the accelerometer 19 will detect the change in velocity and provide an indication of the acceleration profile to the controller. The acceleration profile for this motion would indicate that the apparatus 1 has increased in speed and decreased in speed whilst moving backwards away from the user and also that it has increased in speed and decreased in speed whilst moving forwards, towards the user. The acceleration profile may also indicate that this motion has been repeated and the frequency at which the motion has been repeated. The controller may recognize this profile and then perform an appropriate function.

If the user was to move the apparatus 1 in a different manner then a different acceleration profile may be provided to the controller 4. For example if the user were to shake the apparatus 1 from side to side rather than backwards and forwards the acceleration profile would indicate that the apparatus 1 has moved from side to side. The controller 4 may recognize this acceleration profile and perform a different function.

In some embodiments of the invention the user interface 13 may also comprise additional user input devices such as a key pad, a joy stick, or any other user input device which enables a user of the apparatus 1 to input information into the apparatus 1.

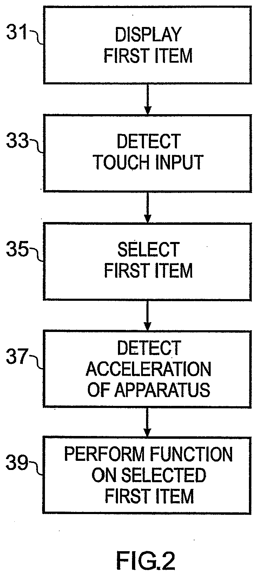

The memory 5 stores a computer program 9 comprising computer program instructions 11 that control the operation of the apparatus 1 when loaded into the processor 3. The computer program instructions 11 provide the logic and routines that enables the apparatus 1 to perform the method illustrated in Fig 2. The processor 3 by reading the memory 5 is able to load and execute the computer program 9.

The computer program instructions 11 may provide computer readable program means for controlling the display 15 to display a first item 53 and means for detecting a touch input via the touch sensitive user input device 17 and means for detecting acceleration of the apparatus 1 via the second user input device 19.

The computer program instructions 11 may also provide computer readable program means for selecting 35 the first item 53 in response to detection 33 of a touch input and performing 39 a first function on the selected first item 53 in response to detection 37 of acceleration of the apparatus 1.

The computer program 9 may arrive at the apparatus 1 via any suitable delivery mechanism 21. The delivery mechanism 21 may be, for example, a computer-readable storage medium, a computer program product 23, a memory device, a record medium such as a CD-ROM or DVD, an article of manufacture that tangibly embodies the computer program 9. The delivery mechanism may be a signal configured to reliably transfer the computer program 9. The apparatus 1 may propagate or transmit the computer program 9 as a computer data signal.

Although the memory 5 is illustrated as a single component it may be implemented as one or more separate components some or all of which may be integrated/removable and/or may provide permanent/semi-permanent/ dynamic/cached storage.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (e.g. Von Neumann)/parallel architectures but also specialized circuits such as field-programmable gate arrays (FPGA), application integration specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

A method of controlling the apparatus 1, according to embodiments of the invention, is illustrated schematically in Fig. 2.

At block 31 a first item 53 is displayed on the display 15. The first item 53 may be a user interface element. A user interface element may be any item which may be displayed on the display 15 and which can have a function performed on it. In some embodiments of the invention the first item 53 may comprise a portion of text. For example a piece of text 51 may be displayed on the display 15 and the first item 53 may comprise a portion of the displayed text 51. The first item 53 may also comprise an image or a user selectable icon. In some embodiments of the invention the first item 53 may be an icon or a dynamic image which is indicative of a piece of content, for example the first item 53 may be an icon which is indicative of an audio or image file or a dynamic image which represents the content stored in an audio file.

In some embodiments of the invention the whole of the first item 53 may be displayed on the display 15, for example where the first item 53 is a user selectable icon the icon may be small enough so that the whole of the icon can be displayed on the display 15.

In some embodiments of the invention only a part of the first item 53 may be displayed on the display 15 at any one time. For example, where the first item 53 is a portion of text the display 15 may be not be large enough to enable the entire portion of text to be displayed so that the text is legible. In such embodiments a part of the text may be displayed on the display 15 and a user may be able to control the apparatus 1 to change which part of the text is displayed on the display 15. For example a user may be able to use a user input device 17, 19 to scroll through the text displayed on the display 15.

At block 33 a touch input is detected 33. A touch input may be any input which is detected by the touch sensitive user input device 17. The touch input may be made by the user of the apparatus. As mentioned above, the touch input may be a trace input, a short actuation, a long actuation or a double actuation or any other type of actuation or combination or sequence of actuations.

The touch input may be made by actuating a specific region of the touch sensitive input device 17. For example, in embodiments of the invention where the touch sensitive input device 17 comprises a touch sensitive display 15 the touch input may be made by actuating the area of the display 15 in which the first item 53 is displayed.

In response to the detection 33 of the touch input the first item 53 is selected. Feedback may be provided to the user to indicate that the first item 53 has been selected. The feedback may be a visual indication, for example, the first item 53 may be displayed in a different color, or may be highlighted or may start to flash on the display. In some embodiments of the invention the feedback may also be an audio feedback.

Selection of the first item 53 enables a function to be performed on the selected item 53 which has been highlighted in response to a previous user input. In embodiments of the invention where a plurality of items may be displayed on the display 15, selection of the first item 53 may distinguish the first item 53 from the other items to enable the controller 4 to perform a function on the selected first item 53 but not the other items.

At block 35 an acceleration of the apparatus 1 is detected. As mentioned above the acceleration of the apparatus 1 is detected by the second user input device 19 which may be an accelerometer 19. The acceleration may be any change of velocity of the apparatus 1 which may be any change in speed or direction of motion of the apparatus 1.

The acceleration profile of the apparatus 1 may be determined by the controller 4.

At block 39, in response to the detection 37 of the acceleration of the apparatus, a function is performed on the selected first item 53. The function performed may be dependent upon the acceleration profile of the apparatus 1. For example, shaking the apparatus 1 backwards and forward may have a different acceleration profile to shaking the apparatus 1 from side to side. Each of these different types of input may be used to control the apparatus 1 to perform a different function on the selected first item 53. For example a first type of acceleration of the apparatus 1 may enable a first function to be performed on the selected item 53 and a second type of acceleration of the apparatus 1 may enable a second function to be performed on the selected item 53.

The function associated with an acceleration profile may depend on the mode of operation of the apparatus 1. The function associated with an acceleration profile may also depend on which functions have been carried out previously and what the select first item 53 is.

The blocks illustrated in Fig. 2 may represent steps in a method and/or sections of code in the computer program 9. The illustration of a particular order to the blocks does not necessarily imply that there is a required or preferred order for the blocks and the order and arrangement of the block may be varied. For example, in some embodiments of the invention the touch input and the acceleration of the apparatus may occur simultaneously. Furthermore, it may be possible for some steps to be omitted.

Figs. 3A to 3G illustrate an embodiment of the invention in use.

Fig. 3A illustrates an apparatus 1 according to an embodiment of the invention. In this embodiment the apparatus 1 is a handheld apparatus such as a mobile cellular telephone.

The apparatus 1 comprises a display 15. In this particular embodiment the apparatus 1 is integrated with the touch sensitive user input device 17 so that the display 15 is a touch sensitive display.

A graphical user interface 59 is displayed on the display 15. In the embodiment illustrated in Fig. 3A the graphical user interface 59 comprises text 51.

In Fig. 3A the first item 53 has been highlighted. The first item 53 is a portion of the text 51. In the embodiment illustrated in Fig. 3A the first item 53 has been highlighted by the line 57 which extends around the first item 53 and distinguishes it from the rest of the text 51. In other embodiments the first item 53 may be highlighted by changing the color of the item or the color of the background on which the item is displayed or by any other means which visually distinguishes the first item 53 from the rest of the text.

The first item may have been highlighted in response to a touch input. For example a user may have actuated the area of the display 15 in which the first item 53 is displayed.

In Fig. 3B the user makes a touch input to select the first item 53 and simultaneously accelerates the apparatus 1 to enable a function to be performed on the first item 53.

In Fig. 3B the user makes a touch input by using their thumb 61 to make a long actuation of the touch sensitive display 15 in the region where the first item 53 is displayed. In response to this touch input the first item 53 is selected. The controller 4 may control the apparatus 1 to provide feedback to the user to indicate that the first item 53 has been selected. For example the controller 4 may control the display 15 to change the color of the selected first item 53 or the color of the background on which the selected first item 53 is displayed.

In the illustrated embodiment the user accelerates the apparatus 1 by shaking the apparatus 1. The user may shake the apparatus 1 by quickly moving the apparatus 1 a short distance towards the right hand side in the direction indicated by the arrow 63 and then by quickly moving the apparatus 1 a short distance towards the left hand side in the direction indicated by the arrow 65. The movement towards the left and right may be repeated a plurality of times.

In the embodiment illustrated in Fig. 3B the touch input is made simultaneously to the acceleration of the apparatus 1. That is, the user keeps their thumb 61 on the area of the display 15 in which the first item 53 is displayed, while they shake the apparatus 1. This type of input may be intuitive for a user to make because keeping their thumb 61 in contact with the touch sensitive display 15 while the function is being performed is analogous to pinning the selected item 53 in place while the function is performed on the selected item 53.

In response to the detection of the acceleration of the apparatus 1 the controller 4 will determine the acceleration profile of the apparatus 1 and perform the function associated with that acceleration profile on the selected first item 53.

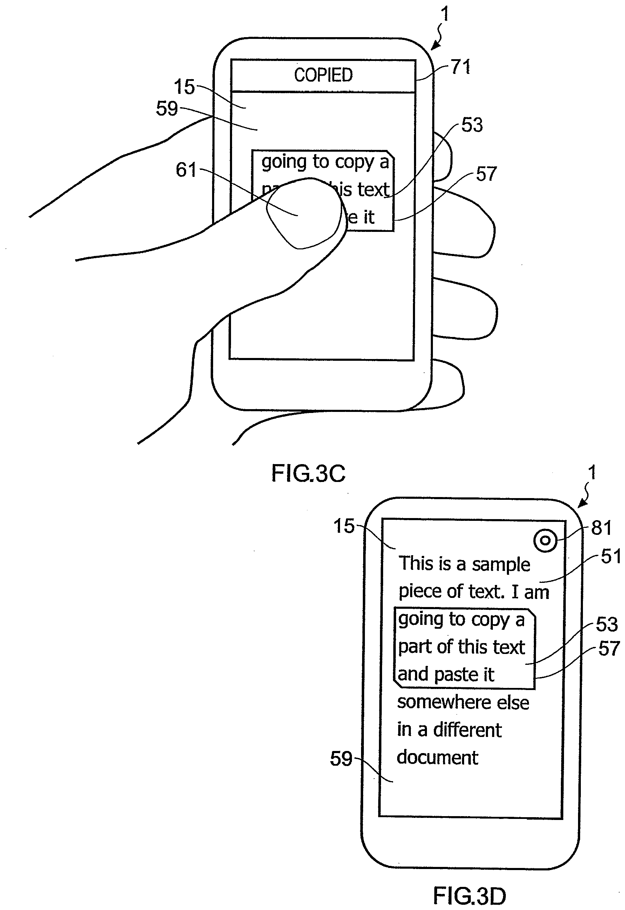

Fig. 3C illustrates a graphical user interface 59 which may be presented to a user of the apparatus 1 to indicate that a function has been performed on the selected first item 53. In the user interface only the selected first item 53 is displayed. The other text 51 which was originally displayed with the selected first item 53 has been removed from the display 15. This provides a visual confirmation to the user that the function has only been performed on the selected first item 53. The text may be removed from the display 15 in an animation or dynamic image. For example, the text may be gradually removed from the display 15 by an animation which looks as though the text is being shaken off. This may provide visual confirmation to a user, while the function is being carried out, that the function is only being performed on the selected first item 53.

An icon 71 is displayed on the display 15. The icon 71 comprises the word "copied" and indicates to a user that the selected first item 53 which is displayed on the display 15 has been copied. In embodiments of the invention where a different function is performed on the selected first item 53 the icon 71 may comprise a different word to indicate that a different function has been performed.

In Fig. 3D the user has moved their thumb 61 so that it is no longer actuating the touch sensitive display 15. The text 51 which is not part of the selected first item 53 is displayed on the display 15 again so that the graphical user interface 59 which is displayed in Fig 3D is similar to the graphical user interface 59 displayed in Fig. 3A. The graphical user interface 59 illustrated in Fig. 3D comprises the text 51 and the selected first item 53. The first item 53 is highlighted 53 in the same manner as in Fig. 3A.

Fig. 3D also comprises an icon 81 which indicates that the first item 53 has been copied. In the illustrated embodiment the icon 81 is a circle within a circle which is displayed above the text 51 without obscuring any of the text 51 from view. In other embodiments the icon may comprise text to specifically indicate the function which has been performed on the item 53.

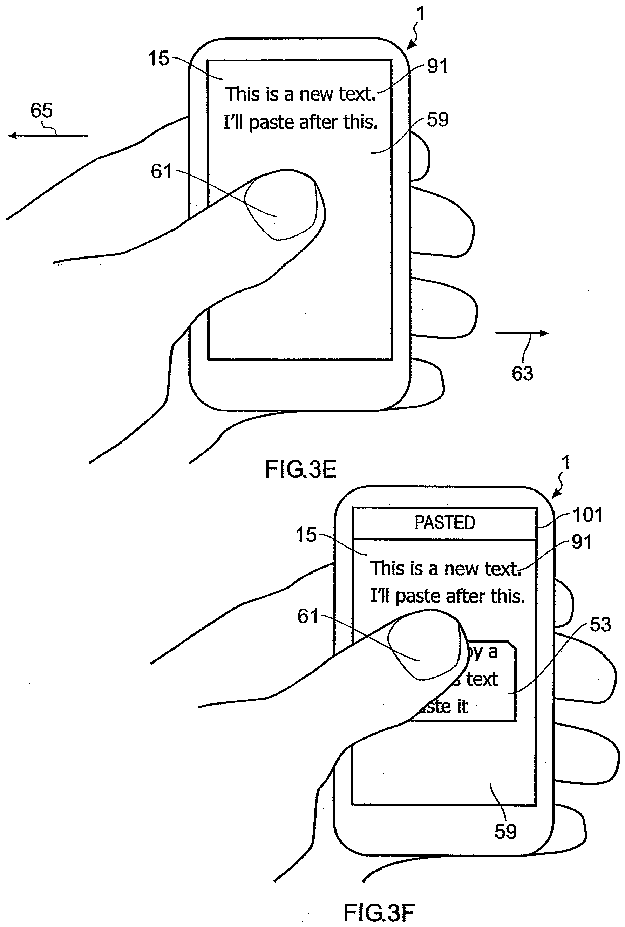

In Fig. 3E the graphical user interface 59 comprises new text 91. The text 91 in Fig. 3E is different to the text 51 in the previous user interfaces 59. In the illustrated embodiment the new text 91 is part of a different document. In other embodiments of the invention the new text 91 may be a different part of the same document. The user may have controlled the apparatus 1 to display the new text 91 by making touch inputs on the touch sensitive display 15.

In other embodiments of the invention the new text 91 may be stored in a different apparatus. The copied first item 53 may have been transmitted to the different apparatus via a communication link. The communication link may be a wireless communication link such as a Bluetooth or wireless local area network link (WLAN).

In Fig. 3E the user makes a further input to control the apparatus 1 to paste the first item 53 into the new text 91. In the illustrated embodiment the input used to paste the copied first item 53 is a repeat of the input which was used to copy the first item 53. The user makes a touch input by using their thumb 61 to make actuate the touch sensitive display 15 at the point within the text 91 where they wish the first item 53 to be pasted. In response to the detection of this user input the point within the text 91 is selected. The controller 4 may also control the display 15 to display a visual indication to the user to indicate that the point has been selected. For example the text 91 surrounding the point may be moved away from the point. This provides a visual indication to a user that the apparatus 1 is ready for the copied text 53 to be pasted.

The user also accelerates the apparatus 1 by shaking the apparatus 1 in the directions of the arrows 63 and 65 as previously described in relation to Fig. 3B. In the embodiment illustrated in Fig. 3E the touch input is made simultaneously to the acceleration of the apparatus 1.

In response to the detection of the acceleration of the apparatus 1 the controller 4 will determine the acceleration profile of the apparatus 1 and perform the function associated with that acceleration profile on the selected first item 53. As the function of copying has previously been carried out the function performed in response to the detection of the acceleration of the apparatus 1 is pasting of the copied first item 53 at the selected point of the text 91.

Fig. 3F illustrates a graphical user interface 59 which is displayed after the first item 53 has been pasted. The graphical user interface 59 comprises the new text 91 and also the text of the first item 53 which has been added to the text 91 at the selected point.

The first item 53 is highlighted to indicate that it has been pasted. The first item 53 has been highlighted by the line 57 which extends around the first item 53. In some embodiments the first item 53 may be highlighted by changing the color of the item or the color of the background on which the item is displayed.

An icon 101 is also displayed on the display. The icon 101 comprises the word "pasted" and indicates to a user that the first item 53 which is highlighted on the display 15 has been pasted.

Fig. 3E illustrates a graphical user interface 59 which is displayed on the display after the first item 53 has been pasted. The graphical user interface 59 comprises the new text 91 and also the text of the first item 53. As the copy and paste is complete the text of the first item 53 is displayed in the same manner as the new text 91 without any highlighting.

Embodiments of the invention provide the advantage that they enable a user to select an item and control the apparatus to perform a function on the selected item simply by making a touch input and by accelerating the apparatus, for example, by shaking it. Both of these inputs are simple for a user to make, they may also be made with a single hand which makes the apparatus easier to use.

Also both of the inputs are quick to make and may even be made simultaneously. There is no need for a user to navigate through a menu structure in order to find the function they wish to select. This makes the apparatus more convenient for a user to use.

As there is no need for a user to navigate through a menu system there is also no need for the menu to be presented on the display 15. This may be advantageous where the size of the display is limited as it decreases the amount of information which has to be presented on the display 15.

Although embodiments of the present invention have been described in the preceding paragraphs with reference to various examples, it should be appreciated that modifications to the examples given can be made without departing from the scope of the invention as claimed. For example in the above described embodiment a first function is performed on the selected first item. In other embodiments of the invention a second item could also be displayed which is not selected. In response to the detection of the acceleration of the apparatus a first function may be performed on the selected first item and a second function may be performed on the second item which has not been selected.

Also in some embodiments of the invention a user may be able to select a plurality of items so that the function associated with the acceleration of the apparatus may be performed on all of the selected items. For example, in the embodiment where the function performed is copying of the items a user may be able to select a plurality of items which may then be copied to a temporary storage area such as a clipboard.

Also in some embodiments of the invention different functions may be performed in response to different types of acceleration of the apparatus 1. For example the function of copying may be performed in response to shaking the apparatus 1 from side to side but the function of cutting may be performed in response to shaking the apparatus 1 backwards and forwards.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus (1) comprising at least one processor (3) and at least one memory (5) storing computer program code, wherein the stored computer program code is configured to, with the at least one processor, cause the apparatus to at least:
cause display of a first item (53) on a touch sensitive display (15);
receive an indication of a detected touch input, provided on the touch sensitive display, at the first item;
select the first item in response to the touch input;
receive an indication of a detected acceleration of the apparatus, the detected acceleration occurring while the touch input is maintained; and
perform a function on the selected first item, in response to the acceleration of the apparatus occurring while the touch input is maintained.

2. The apparatus as claimed in claim 1, wherein the stored computer program code is configured to, with the at least one processor, further cause the apparatus to:
determine an acceleration profile of the apparatus based at least in part on the detected acceleration of the apparatus; and
determine that the function corresponds to the determined acceleration profile.

3. The apparatus as claimed in claim 2, wherein the function is determined from a plurality of functions, each of the plurality of functions corresponding to a respective acceleration profile.

4. The apparatus as claimed in any of the preceding claims, wherein the first item comprises a user interface element.

5. The apparatus as claimed in any of the preceding claims, wherein the determined function comprises copying of the first item to enable it to be pasted elsewhere.

6. The apparatus as claimed in any of the preceding claims, wherein the stored computer program code is configured to, with the at least one processor, further cause the apparatus to:
cause display of a second item;
receive an indication of a detected second acceleration of the apparatus; and
perform a second function in response to the second acceleration of the apparatus.

7. The apparatus as claimed in any of the preceding claims, wherein the apparatus comprises or is embodied on a mobile phone.

8. A method comprising:
causing display of a first item (53) on a touch sensitive display (15);
receiving an indication of a detected touch input, provided on the touch sensitive display, at the first item;
selecting the first item in response to the touch input;
receiving an indication of a detected acceleration input, the detected acceleration input occurring while the touch input is maintained; and
performing a function on the selected first item, in response to the acceleration input occurring while the touch input is maintained.

9. The method of claim 8, further comprising: determining an acceleration profile of the acceleration input; and determining that the function corresponds to the determined acceleration profile.

10. The method of claim 9, wherein the function is determined from a plurality of functions, each of the plurality of functions corresponding to a respective acceleration profile.

11. The method as claimed in claim 8 or 9, wherein the acceleration input comprises an acceleration of an apparatus comprising the touch sensitive display.

12. The method as claimed in any of claims 8 to 11, wherein the determined function comprises copying of the first item to enable it to be pasted elsewhere.

13. A computer program (9) comprising computer program instructions (11) that, when executed by at least one processor (3), cause the processor to perform:
causing display of a first item (53) on a touch sensitive display (15);
receiving an indication of a detected touch input, provided on the touch sensitive display, at the first item;
selecting the first item in response to the touch input;
receiving an indication of a detected acceleration input, the detected acceleration input occurring while the touch input is maintained; and
performing a function on the selected first item, in response to the acceleration input occurring while the touch input is maintained.

14. The computer program of claim 13, further comprising: determining an acceleration profile of the acceleration input; and determining that the function corresponds to the determined acceleration profile.

15. The computer program of claim 14, wherein the function is determined from a plurality of functions, each of the plurality of functions corresponding to a respective acceleration profile.

## Patentansprüche

1. Vorrichtung (1), umfassend mindestens einen Prozessor (3) und mindestens einen Speicher (5), der Computerprogrammcode speichert, wobei der gespeicherte Computerprogrammcode ausgestaltet ist, um mit dem mindestens einen Prozessor zu bewirken, dass die Vorrichtung mindestens folgendes durchführt:
Bewirken der Anzeige eines ersten Objekts (53) auf einer berührungsempfindlichen Anzeige (15);
Empfangen einer Angabe einer detektierten Berührungseingabe, die auf der berührungsempfindlichen Anzeige bereitgestellt wird, auf dem ersten Objekt;
Auswählen des ersten Objekts in Reaktion auf die Berührungseingabe;
Empfangen einer Angabe einer detektierten Beschleunigung der Vorrichtung, wobei die detektierte Beschleunigung stattfindet, während die Berührungseingabe gehalten wird; und
Durchführen einer Funktion mit dem ausgewählten ersten Objekt in Reaktion auf die Beschleunigung der Vorrichtung, die stattfindet, während die Berührungseingabe gehalten wird.

2. Vorrichtung nach Anspruch 1, wobei der gespeicherte Computerprogrammcode ausgestaltet ist, um mit dem mindestens einen Prozessor des Weiteren zu bewirken, dass die Vorrichtung folgendes durchführt:
Ermitteln eines Beschleunigungsprofils der Vorrichtung basierend mindestens teilweise auf der detektierten Beschleunigung der Vorrichtung; und
Ermitteln, dass die Funktion dem ermittelten Beschleunigungsprofil entspricht.

3. Vorrichtung nach Anspruch 2, wobei die Funktion aus einer Vielzahl von Funktionen ermittelt wird, wobei jede von der Vielzahl der Funktionen einem jeweiligen Beschleunigungsprofil entspricht.

4. Vorrichtung nach einem der vorhergehenden Ansprüche, wobei das erste Objekt ein Benutzerschnittstellenelement umfasst.

5. Vorrichtung nach einem der vorhergehenden Ansprüche, wobei die ermittelte Funktion Kopieren des ersten Objekts umfasst, damit es an anderer Stelle eingefügt werden kann.

6. Vorrichtung nach einem der vorhergehenden Ansprüche, wobei der gespeicherte Computerprogrammcode ausgestaltet ist, um mit dem mindestens einen Prozessor des Weiteren zu bewirken, dass die Vorrichtung folgendes durchführt:
Bewirken der Anzeige eines zweiten Objekts;
Empfangen einer Angabe einer detektierten zweiten Beschleunigung der Vorrichtung; und
Durchführen einer zweiten Funktion in Reaktion auf die zweite Beschleunigung der Vorrichtung.

7. Vorrichtung nach einem der vorhergehenden Ansprüche, wobei die Vorrichtung ein Mobiltelefon umfasst oder darauf verkörpert ist.

8. Verfahren, umfassend:
Bewirken von Anzeige eines ersten Objekts (53) auf einer berührungsempfindlichen Anzeige (15);
Empfangen einer Angabe einer detektierten Berührungseingabe, die auf der berührungsempfindlichen Anzeige bereitgestellt wird, auf dem ersten Objekt;
Auswählen des ersten Objekts in Reaktion auf die Berührungseingabe;
Empfangen einer Angabe einer detektierten Beschleunigungseingabe, wobei die detektierte Beschleunigungseingabe stattfindet, während die Berührungseingabe gehalten wird; und
Durchführen einer Funktion mit dem ausgewählten ersten Objekt in Reaktion auf die Beschleunigungseingabe, die stattfindet, während die Berührungseingabe gehalten wird.

9. Verfahren nach Anspruch 8, des Weiteren umfassend:
Ermitteln eines Beschleunigungsprofils von der Beschleunigungseingabe; und
Ermitteln, dass die Funktion dem ermittelten Beschleunigungsprofil entspricht.

10. Verfahren nach Anspruch 9, wobei die Funktion aus einer Vielzahl von Funktionen ermittelt wird, wobei jede von der Vielzahl der Funktionen einem jeweiligen Beschleunigungsprofil entspricht.

11. Verfahren nach Anspruch 8 oder 9, wobei die Beschleunigungseingabe eine Beschleunigung einer Vorrichtung umfasst, die die berührungsempfindliche Anzeige umfasst.

12. Verfahren nach einem der Ansprüche 8 bis 11, wobei die ermittelte Funktion Kopieren des ersten Objekts umfasst, damit es an anderer Stelle eingefügt werden kann.

13. Computerprogramm (9), umfassend Computerprogrammanweisungen (11), die bei Ausführung durch mindestens einen Prozessor (3) bewirken, dass der Prozessor folgendes durchführt:
Bewirken von Anzeige eines ersten Objekts (53) auf einer berührungsempfindlichen Anzeige (15);
Empfangen einer Angabe einer detektierten Berührungseingabe, die auf der berührungsempfindlichen Anzeige bereitgestellt wird, auf dem ersten Objekt;
Auswählen des ersten Objekts in Reaktion auf die Berührungseingabe;
Empfangen einer Angabe einer detektierten Beschleunigungseingabe, wobei die detektierte Beschleunigungseingabe stattfindet, während die Berührungseingabe gehalten wird; und
Durchführen einer Funktion mit dem ausgewählten ersten Objekt in Reaktion auf die Beschleunigungseingabe, die stattfindet, während die Berührungseingabe gehalten wird.

14. Computerprogramm nach Anspruch 13, des Weiteren umfassend:
Ermitteln eines Beschleunigungsprofils von der Beschleunigungseingabe; und
Ermitteln, dass die Funktion dem ermittelten Beschleunigungsprofil entspricht.

15. Computerprogramm nach Anspruch 14, wobei die Funktion aus einer Vielzahl von Funktionen ermittelt wird, wobei jede von der Vielzahl der Funktionen einem jeweiligen Beschleunigungsprofil entspricht.

## Revendications

1. Appareil (1) comprenant au moins un processeur (3) et au moins une mémoire (5) stockant un code de programme d'ordinateur, dans lequel le code de programme d'ordinateur stocké est configuré pour, avec l'au moins un processeur, amener l'appareil à au moins :
provoquer l'affichage d'un premier élément (53) sur un écran tactile (15) ;
recevoir une indication d'une entrée tactile détectée, fournie sur l'écran tactile, au niveau du premier élément; sélectionner le premier élément en réponse à l'entrée tactile;
recevoir une indication d'une accélération détectée de l'appareil, l'accélération détectée se produisant lorsque l'entrée tactile est maintenue; et
exécuter une fonction sur le premier élément sélectionné, en réponse à l'accélération de l'appareil se produisant lorsque l'entrée de touche est maintenue.

2. Appareil selon la revendication 1, dans lequel le code de programme d'ordinateur stocké est configuré pour, avec l'au moins un processeur, amener en outre l'appareil à :
déterminer un profil d'accélération de l'appareil sur la base au moins en partie de l'accélération détectée de l'appareil; et
déterminer que la fonction correspond au profil d'accélération déterminé.

3. Appareil selon la revendication 2, dans lequel la fonction est déterminée parmi une pluralité de fonctions, chacune de la pluralité de fonctions correspondant à un profil d'accélération respectif.

4. Appareil selon l'une quelconque des revendications précédentes, dans lequel le premier élément comprend un élément d'interface utilisateur.

5. Appareil selon l'une quelconque des revendications précédentes, dans lequel la fonction déterminée comprend la copie du premier élément pour lui permettre d'être collé ailleurs.

6. Appareil selon l'une quelconque des revendications précédentes, dans lequel le code de programme d'ordinateur stocké est configuré pour, avec l'au moins un processeur, amener en outre l'appareil à :
provoquer l'affichage d'un deuxième élément;
recevoir une indication d'une deuxième accélération détectée de l'appareil; et
exécuter une deuxième fonction en réponse à la deuxième accélération de l'appareil.

7. Appareil selon l'une quelconque des revendications précédentes, dans lequel l'appareil comprend ou est mis en œuvre sur un téléphone mobile.

8. Procédé comprenant :
la provocation de l'affichage d'un premier élément (53) sur un écran tactile (15) ;
la réception d'une indication d'une entrée tactile détectée, fournie sur l'écran tactile, au niveau du premier élément;
la sélection du premier élément en réponse à l'entrée tactile;
la réception d'une indication d'une entrée d'accélération détectée, l'entrée d'accélération détectée se produisant lorsque l'entrée tactile est maintenue; et
l'exécution d'une fonction sur le premier élément sélectionné, en réponse à l'entrée d'accélération se produisant lorsque l'entrée de touche est maintenue.

9. Procédé selon la revendication 8, comprenant en outre :
la détermination d'un profil d'accélération de l'entrée d'accélération; et
la détermination que la fonction correspond au profil d'accélération déterminé.

10. Procédé selon la revendication 9, dans lequel la fonction est déterminée parmi une pluralité de fonctions, chacune de la pluralité de fonctions correspondant à un profil d'accélération respectif.

11. Procédé selon la revendication 8 ou 9, dans lequel l'entrée d'accélération comprend une accélération d'un appareil comprenant l'écran tactile.

12. Procédé selon l'une quelconque des revendications 8 à 11, dans lequel la fonction déterminée comprend la copie du premier élément pour lui permettre d'être collé ailleurs.

13. Programme d'ordinateur (9) comprenant des instructions de programme d'ordinateur (11) qui, lorsqu'elles sont exécutées par au moins un processeur (3), amènent le processeur à effectuer :
la provocation de l'affichage d'un premier élément (53) sur un écran tactile (15) ;
la réception d'une indication d'une entrée tactile détectée, fournie sur l'écran tactile, au niveau du premier élément;
la sélection du premier élément en réponse à l'entrée tactile;
la réception d'une indication d'une entrée d'accélération détectée, l'entrée d'accélération détectée se produisant lorsque l'entrée tactile est maintenue; et
l'exécution d'une fonction sur le premier élément sélectionné, en réponse à l'entrée d'accélération se produisant lorsque l'entrée de touche est maintenue.

14. Programme d'ordinateur selon la revendication 13, comprenant en outre :
la détermination d'un profil d'accélération de l'entrée d'accélération; et
la détermination que la fonction correspond au profil d'accélération déterminé.

15. Programme d'ordinateur selon la revendication 14, dans lequel la fonction est déterminée parmi une pluralité de fonctions, chacune de la pluralité de fonctions correspondant à un profil d'accélération respectif.
